Europäisches Patentamt

European Patent Office

Office européen des brevets

(11) Veröffentlichungsnummer: **0 308 585 B1**

(12) **EUROPÄISCHE PATENTSCHRIFT**

(45) Veröffentlichungstag der Patentschrift: **21.10.92**

(21) Anmeldenummer: **88108866.0**

(22) Anmeldetag: **03.06.88**

(51) Int. Cl.⁵: **G01S 7/02**, G01S 13/28, G01S 7/06

(54) **Verfahren und Anordnung zur Radarzielentdeckung und -klassifizierung.**

(30) Priorität: **19.09.87 DE 3731559**

(43) Veröffentlichungstag der Anmeldung:
**29.03.89 Patentblatt 89/13**

(45) Bekanntmachung des Hinweises auf die
Patenterteilung:
**21.10.92 Patentblatt 92/43**

(84) Benannte Vertragsstaaten:
**BE DE ES FR GB IT NL SE**

(56) Entgegenhaltungen:
**DE-A- 3 005 230**
**DE-A- 3 600 827**
**US-A- 3 175 213**
**US-A- 4 472 717**

**INT. CONFERENCE ON RADAR PRESENT AND FUTURE, London, 23.-25. Oktober 1973, Seiten 297-302, IEE; R.N. STEVENS et al.: "The improvement in performance of an s-band surveillance radar operating in conditions of rain clutter"**

(73) Patentinhaber: **TELEFUNKEN SYSTEMTECHNIK AG**
**Sedanstrasse 10**
**W-7900 Ulm(DE)**

(72) Erfinder: **Liem, Tiang-Gwan**
**Franz-Wiedemeier-Strasse 96**
**W-7900 Ulm/Donau(DE)**
Erfinder: **Plumeyer, Peter, Dr.**
**Ensostrasse 16**
**W-7900 Ulm/Einsingen(DE)**
Erfinder: **Freimeyer, Helmut**
**Beethovenstrasse 2**
**W-7913 Senden(DE)**

EP 0 308 585 B1

# Beschreibung

Die Erfindung betrifft ein Verfahren und eine Anordnung zur Radarzielentdeckung und -klassifizierung und ist insbesondere geeignet zur Entdeckung und Klassifizierung bodennaher Ziele.

Neben der reinen Zielentdeckung ist vor allem bei Radaranwendungen zur Entdeckung von Bedrohungen darstellenden Radarzielen in geringen Entfernungen, wie z. B. Gefechtsfeldfahrzeugen oder nur kurz über den Horizont steigenden Hubschraubern, auch eine schnelle Klassifizierung von Zielen von bedeutendem Vorteil. Um die Gefahr des Entdecktwerdens zu verringern, werden dabei anstelle kurzer Impulse expandierte codierte Pulse geringerer Leistung abgestrahlt und die Echosignale im Empfänger wieder komprimiert.

Aus der DE 36 00 827 A1 ist beispielsweise ein Verfahren bekannt, bei welchem zur Entdeckung von Hubschraubern die sogenannten Rotorblitze, kurzzeitige amplitudenstarke Echos bei bestimmten Rotorstellungen, ausgewertet werden. Um mehrere aufeinanderfolgende solche Echos zu empfangen und auszuwerten, wird der gesamte Überwachungsraum mit einem codierten CW-Signal ausgeleuchtet. Für die Richtungsselektion ist ein Vielfachkeulen-Antennensystem mit entsprechend vielkanaligen Empfangseinrichtungen vorgesehen. Der für die vielkanalige Antennen- und Empfängerausführung erforderliche Aufwand ist aber häufig, vor allem bei mobilen Radaranlagen, nicht vertretbar.

Der Erfindung liegt daher die Aufgabe zugrunde, ein Verfahren zur Radarzielentdeckung und -klassifizierung, das mit geringem Aufwand eine Erfassung und Trennung der wesentlichen Ziele ermöglich, sowie eine Anordnung zur Durchführung eines solchen Verfahrens anzugeben.

Die Erfindung ist in den Patentansprüchen 1 und 5 beschrieben. Die Unteransprüche enthalten vorteilhafte Ausführungsformen der Erfindung.

Die Erfindung macht sich die Erkenntnis zunutze, daß die Radarechos von Hubschraubern sich nicht nur durch die Rotorblitze von anderen Zielechos unterscheiden, sondern auch die Echos des Rotorkopfes und der Rotorblätter in den nicht ausgezeichneten Rotor-Stellungen eine typische Verteilung im Dopplerspektrum bewirken. Dadurch kann mit einer einfachen Sende-/Empfangs-Richtantenne, vorzugsweise einer sogenannten "Pillbox"-Antenne mit Zirkularpolarisationsvorsatz, innerhalb der Verweilzeit des geschwenkten Richtdiagramms auf dem Ziel mittels an sich bekannter Dopplerfilterung eine Dopplersignatur der Zielechos ermittelt und mit einem oder mehreren gespeicherten Mustersignaturen für Hubschrauber verglichen werden, auch wenn keine Rotorblitze empfangen werden. Bei ausreichender Übereinstimmung der ermittelten Signatur mit einem gespeicherten Muster wird eine entsprechende Meldung ausgegeben. Die Zielverweilzeit braucht daher nicht an der Wiederholperiode der Rotorblitze ausgerichtet werden, so daß daraus auch keine Einschränkungen bezüglich der Radarpulsfolgefrequenz PRF und der Schwenkgeschwindigkeit des Diagramms resultieren. Durch die Auswertung beider Polarisationen ergibt sich eine gute Trennung von stehenden echten Zielen und Festzielclutter. Die Erfindung ermöglicht damit bei aufwandsarmem Aufbau der Radaranordnung mit nur einer Richtantenne und zwei Empfangskanälen die Entdeckung und Trennung unterschiedlicher Ziele. Die mit der Erfindung gewonnenen Informationen können natürlich noch weiter untersucht und ausgewertet werden, indem beispielsweise in bekannter Weise durch Vergleich von Zieldaten aufeinanderfolgender Antennenumläufe Zielbewegungen extrahiert werden oder durch Untersuchung der räumlichen Zielverteilung Zielinformationen, z. B. Panzerverbände, erkannt werden.

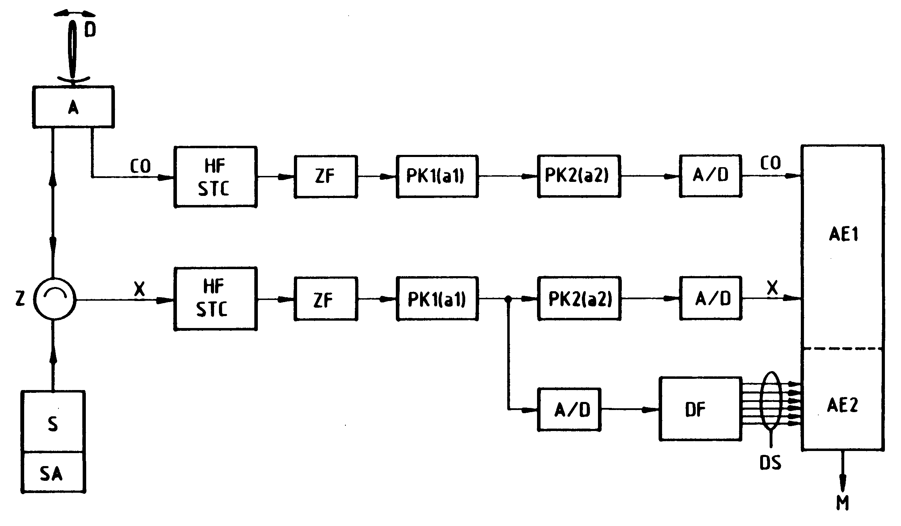

Die Erfindung ist nachfolgend anhand der Abbildung noch eingehend veranschaulicht.

In der Sendesignalaufbereitung SA werden die codierten Sendeimpulse vorgegebener Sendefrequenz vorbereitet und zu den durch die Pulsfolgefrequenz festliegenden Zeitpunkten auf den Sender S gegeben. Die vom Sender abgegebenen Leistungsimpulse gelangen über den Zirkulator 7 zur Sende-/Empfangs-Antenne A und werden von dieser als zirkular polarisierte Wellen festgelegten Polarisationssinns abgestrahlt. Das Richtdiagramm D der Antenne kann innerhalb des Überwachungsbereichs mechanisch und/oder elektronisch geschwenkt werden. Die von Erdboden, natürlichen oder künstlichen (man-made) Zielen reflektierten Echos sind i. a. depolarisiert, so daß die auf die Antenne auftreffenden Echosignale sowohl gleichsinnig (co-) als auch gegensinnig (cross-, x-) zum Sendesignal polarisierte Komponenten enthalten. Die gegensinnig (x-)polarisierten Komponenten werden über den Zirkulator Z einem der beiden Empfangszweige zugeführt. Die gleichsinnig polarisierten Echokomponenten werden getrennt aufgenommen und direkt dem anderen Empfangszweig zugeführt. Jeder Empfangszweig enthält ein HF-Eingangsteil mit zeitabhängiger Verstärkungsregelung STC, eine Zwischenfrequenzstufe ZF, eine erste Pulskompressionsstufe PK1 und eine zweite Pulskompressionsstufe PK2. In den ersten Pulskompressionsstufen PK1 werden die Empfangssignale jeweils um einen Faktor $a1$, in den Stufen PK2 um einen Faktor $a2$ komprimiert, so daß die am Ausgang der Stufen PK2 zur Verfügung stehenden Signale gegenüber den Eingangssignalen der HF-Eingangsteile um den Faktor $a1 \cdot a2$ komprimiert sind.

2

Im Empfangszweig für die x-polarisierten Komponenten werden die Ausgangssignale der ersten Pulskompressionsstufe PK1, die nur um den Faktor a1 komprimiert sind, ncht nur der zweiten Pulskompressionsstufe PK2 zugeführt, sondern gleichzeitig an den Eingang eines Analog/Digital-Wandlers gelegt. Die digitalisierten Abtastwerte werden auf den Eingang einer an sich bekannten Dopplerfilterbank DF gegeben. Die Doppler frequenzspektren werden als Dopplersignaturen DS an die Auswerteeinrichtung AE2 ausgegeben. Die Entfernungsauflösung bei der Dopplerverarbeitung ist durch die nur einstufige Kompression um den Faktor a1 eingeschränkt. Die nur teilweise Kompression bringt aber für den vorgesehenen Einsatzfall zur Humschraubererkennung aus der Dopplersignatur den Vorteil, daß bei geringerem Kompressionsfaktor auch die das Dopplerspektrum mitbeeinflussenden Nebenzipfel der komprimierten Impulse niedriger sind und dadurch die Dopplersignaturen weniger verfälschen. Zudem wird die Erkenntnis ausgenutzt, daß Hubschrauber, deren Erkennung das wesentliche Ziel der Dopplerverarbeitung mit Mustervergleich ist, i. a. in deutlich größerer Entfernung erstmals entdeckt werden können als durch die natürliche Umgebung verdeckte Bodenfahrzeuge, wie Panzer oder Lastwagen, und daß bei größeren Zielentfernungen auch eine größere absolute Entfernungsauflösungszelle in Kauf genommen werden kann. Schließlich ist die Dopplerverarbeitung zeitlich längerer Impulse auch mit geringerem Aufwand und preisgünstigen Standardbauelementen möglich, während bei sehr kurzen Pulsen extrem schnelle Baugruppen erforderlich sind.

Die auch noch in den zweiten Pulskompressionsstufen PK2 komprimierten Signale werden demgegenüber nach Digitalisierung der ersten Auswerteeinrichtung AE1 zugeführt und dort mit wesentlich höherer Entfernungsauflösung ausgewertet.

Wesentlich zur Unterscheidung von Bodenclutter und echten Zielen, wie Panzern oder Lastwagen, ist dabei ergänzend zu bekannten und gerbräuchlichen Zieldetektionskriterien der Vergleich der auf die gleichsinnig (co-) und gegensinnig (x-)polarisierten Echokomponenten entfallenden Leistungsanteile, wodurch die echten Ziele mit hoher Wahrscheinlichkeit aus dem Clutter hervorgehoben werden können. Die hierbei ausgenutzten Unterschiede im Polarisationsverhalten zwischen reflektierenden echten Zielen und Erdboden sind an sich (z. B. "Polarisation Utilization in Large Radars", Proc. of the Int. Conf. on Radar, Mai 1984, Paris, Seiten 466 - 471) bekannt. Eine Dopplerauswertung der stark komprimierten Signale wird aus den bereits erwähnten Gründen und der Überlegung, daß die durch die Polarisationsauswertung hervorgehobenen Ziele, insbeosndere Panzer, überwiegend keine oder nur geringe dopplerverschobene Echosignalanteile liefern und daher durch eine Dopplerverarbeitung ohnehin nicht von Bodenclutter getrennt werden könnten. Hingegen erlaubt die hohe Entfernungsauflösung in Mehrzielsituationen noch eine gute räumliche Einordnung der einzelnen Ziele und damit auch die zusätzliche Prüfung, ob mehrere Ziele eine z. B. für Panzerverbände typische Formation bilden, wodurch die Sicherheit der Klassifizierung weiter verbessert würde. Die Ergebnisse der Auswertungen werden als Zielmeldungen M einschließlich ermittelter Zielparameter und Klassifizierung zur Anzeige und/oder weiteren Auswertung ausgegeben.

Als Sende-/Empfangs-Antenne wird vorzugsweise eine einfach aufgebaute, preisgünstige und zuverlässige sogenannte "Pill-box"-Antenne eingesetzt. Eine solche Antenne ist mit horizontaler oder vertikaler Polarisation realisierbar. Die Zirkularpolarisation wird in bekannter Weise durch einen Polarisationsvorsatz erreicht.

Die Sicherheit bei der Erkennung von Hubschraubern kann weiter erhöht werden, wenn nach einer Hubschrauberzielmeldung aus dem Mustervergleich der Dopplersignatur die Antenne mit einer Verweildauer, die die zuverlässige Auswertung der Rotorblitze ermöglicht, auf das Ziel gerichtet wird. Die gesamte Informationserneuerungszeit wird dadurch kaum beeinträchtigt, da dies nur für den Fall einer Hubschraubererkennung im Normalbetrieb erfolgt.

**Patentansprüche**

1. Verfahren zur Radarzielentdeckung und -klassifizierung bei einem Radar, welches über eine Sende-/Empfangs-Antenne (A) mit geschwenktem Richtdiagramm (D) codierte Sendeimpulse abstrahlt und empfangene Echosignale komprimiert, dadurch gekennzeichnet, daß die Sendeimpulse in Zirkularpolarisation abgestrahlt werden, daß die empfangenen Echosignale in Komponenten gegensinniger zirkularer Polarisation aufgeteilt werden, die jeweils getrennt voneinander in zwei parallelen Empfangszweigen (co, x) verarbeitet und komprimiert werden, daß die komprimierten Signale aus beiden Empfangszweigen zur Trennung echter Ziele von Clutter in einer ersten Auswerteeinrichtung (AE1) miteinander verglichen werden und daß die komprimierten Signale aus nur einem der Empfangszweige (x) zusätzlich einer Dopplerfilterung und die ermittelte Dopplersignatur einer zweiten Auswerteeinrichtung (AE2) mit Mustervergleich zur Hubschraubererkennung unterzogen werden.

2. Verfahren nach Anspruch 1, dadurch gekennzeichnet, daß die Kompression der Echosignale in dem einen Empfangszweig in zwei Stufen (PK1, PK2) erfolgt und die Dopplerfilterung (DF) für die nur in der ersten Stufe (PK1) komprimierten Signale durchgeführt wird, und daß die Bestimmung der Zielentfernung bei der ersten Signalverarbeitung mit höherer Auflösung erfolgt als bei der zweiten Signalverarbeitung.

3. Verfahren nach Anspruch 1 oder 2, dadurch gekennzeichnet, daß bei Erkennen eines Hubschraubers aus dem Mustervergleich die entsprechende Zielrichtung mit höherer Verweildauer ausgeleuchtet wird.

4. Verfahren nach einem der Ansprüche 1 bis 3, dadurch gekennzeichnet, daß vor der Pulskompression die Echosignale in eine Zwischenfrequenzlage umgesetzt werden.

5. Radaranordnung mit einer Sende-/Empfangs-Antenne (A) mit geschwenktem Richtdiagramm (D) und mit Einrichtungen zur Codierung von Sendeimpulsen und entsprechender Kompression empfangener Echosignale zur Durchführung des Verfahrens nach Anspruch 1, dadurch gekennzeichnet, daß die Sende-/Empfangs-Antenne (A) zirkular polarisierte Sendeimpulse abstrahlt und auftreffende Echosignale in beiden Zirkularpolarisationen getrennt aufnimmt und je einem von zwei parallelen Empfangszweigen (co, x) zuführt, daß im beiden Empfangszweigen Einrichtungen zur Pulskompression (PK1, PK2) vorhanden sind, daß der eine Empfangszweig zusätzlich an eine Doppler-Filterbank (DF) darin miteinander verglichen sind beiden Empfangszweige (co, x) zur Trennung echter Ziele von Clutter einer ersten Auswerteeinrichtung (AE1) zugeführt und darin miteinander verglichen sind und daß die Ausgänge der Doppler-Filterbank (DF) mit einer zweiten Auswerteeinrichtung (AE2) zur Hubschraubererkennung durch Vergleich der Echo-Dopplersignatur (DS) mit gespeicherten Mustern verbunden sind.

6. Verfahren nach Anspruch 5, dadurch gekennzeichnet, daß die Einrichtungen zur Pulskompression in beiden Empfangszweigen identisch aufgebaut sind und jeweils zwei Kompressionsstufen (PK1, PK2) umfassen, und daß die Dopplerfilterbank nach der ersten Kompressionsstufe (PK1) des einen Empfangszweiges (x) angeschlossen ist.

7. Anordnung nach Anspruch 5 oder Anspruch 6, dadurch gekennzeichnet, daß an den Eingängen der ersten Auswerteeinrichtung und der Doppler-Filterbank Analog/Digital-Wandler (A/D) angeordnet sind.

8. Anordnung nach einem der Ansprüche 5 bis 7, dadurch gekennzeichnet, daß die Antenne vom Typ der sogenannten "Pillbox"-Antennen mit einem Zirkulatorpolarisationsvorsatz ist.

## Claims

1. Method for the radar target detection and classification with a radar equipment which radiates coded transmitted pulses by way of a transmitting and receiving aerial (A) with pivoted directional diagram (D) and compresses received echo signals, characterised thereby, that the transmitted pulses are radiated in circular polarisation, that the received echo signals are split up into components of opposite circular polarisation, which are processed and compressed each separately from the other in two parallel reception branches (co, x), that the compressed signals from both reception branches are each compared with the other in a first evaluating equipment (AE1) for the separation of genuine targets from clutter and that the compressed signals from only one of the reception branches (x) are additionally subjected to a Doppler filtering and the ascertained Doppler signature is subjected to a second evaluating equipment (AE2) with pattern comparison for helicopter recognition.

2. Method according to claim 1, characterised thereby, that the compression of the echo signals in the one reception branch takes place in two stages (PK1, PK2) and the Doppler filtering (DF) is performed for the signals compressed only in the first stage (PK1) and that the ascertaining of the target distance takes place in the first signal processing with higher resolution than in the second signal processing.

3. Method according to claim 1 or 2, characterised thereby, that on recognition of a helicopter from the pattern comparison, the corresponding target direction is illuminated with higher dwell time.

4. Method according to one of the claims 1 to 3, characterised thereby, that the echo signals are translated into an intermediate frequency position before the pulse compression.

5. Radar arrangement with a transmitting and receiving aerial (A) with pivoted directional diagram (D) and with equipments for the coding of transmitted pulses and corresponding compression of received echo signals for the performance of the method according to claim 1, characterised thereby, that the transmitting and receiving aerial (A) radiates circularly polarised transmitted pulses and receives incident echo signals separately in both directions of polarisation and feeds each to a respective one of two parallel reception branches (co, x), that equipments for pulse compression (PK1, PK2) are present in both reception branches, that the one reception branch is additionally connected to a Doppler filter bank (DF), that the compressed output signals of both the reception branches (co, x) are fed to a first evaluating equipment (AE1) and each compared with the other therein for the separation of genuine targets from clutter and that the outputs of the Doppler filter bank (DF) are connected with a second evaluating equipment (AE2) for helicopter recognition by comparison of the Doppler echo signature (DS) with stored patterns.

6. Arrangement according to claim 5, characterised thereby, that the equipments for pulse compression are built up identically in both reception branches and each comprise two compression stages (PK1, PK2) and that the Doppler filter bank is connected behind the first compression stage (PK1) of the one reception branch (x).

7. Arrangement according to claim 5 or claim 6, characterised thereby, that analog-to-digital converters (A/D) are arranged at the inputs of the first evaluating equipment and the Doppler filter bank.

8. Arrangement according to one of the claims 5 to 7, characterised thereby, that the aerial is of the type of the so-called "pill box" aerials with a circularly polarising attachment.

**Revendications**

1. Procédé de détection et classification de cibles radar dans le cas d'un radar qui, par une antenne d'émission/réception (A) dont le diagramme directionnel (D) est soumis à un déplacement angulaire, rayonne des impulsions codées émises et comprime des signaux d'écho reçus, caractérisé par le fait que les émissions émises sont rayonnées avec une polarisation circulaire, par le fait que les signaux d'écho reçus sont partagés en composantes à polarisations circulaires opposées qui, en étant à chaque fois séparées l'une de l'autre, sont traitées et comprimées dans deux voies de réception parallèles (CO, X), par le fait qu'afin de séparer les cibles véritables du fouillis de signaux, les signaux comprimés venant des deux voies de réception sont comparés entre eux dans un premier dispositif d'interprétation (AE1) et par le fait que les signaux comprimés provenant d'une seule des voies de réception (X) sont en outre soumis à un filtrage Doppler et la signature Doppler obtenue est appliquée à un deuxième dispositif d'interprétation (AE2) pour la reconnaissance d'hélicoptère(s) par comparaison avec un ou des modèles.

2. Procédé selon revendication 1, caractérisé par le fait que la compression des signaux d'écho dans la première voie de réception s'effectue dans deux étages (PK1, PK2) et le filtrage Doppler (DF) est effectué pour des signaux n'ayant été comprimés que dans le premier étage (PK1), et par le fait que la détermination de l'éloignement de la cible est effectuée avec une résolution plus poussée dans le cas du premier traitement de signaux que dans le cas du deuxième traitement de signaux.

3. Procédé selon revendication 1 ou 2, caractérisé par le fait qu'en cas d'identification d'un hélicoptère à la suite de la comparaison avec un ou des modèles, la direction correspondant à la cible est explorée avec un temps de maintien plus important.

4. Procédé selon l'une des revendications 1 à 3, caractérisé par le fait qu'avant la compression des impulsions, les signaux d'écho sont convertis en fréquence, vers une plage de fréquence intermédiaire.

5. Dispositif de radar avec une antenne d'émission/réception (A) dont le diagramme directionnel (D) est soumis à un déplacement angulaire, et avec des dispositifs pour coder des impulsions émises et pour comprimer de manière correspondante les signaux d'écho reçus, pour mettre en oeuvre le procédé selon revendication 1, caractérisé par le fait que l'antenne d'émission/réception (A) rayonne des impulsions d'émission polarisées circulairement et reçoit séparément les signaux d'écho dans les deux polarisations circulaires et les transmet chacun à l'une de deux voies de réception parallèles (CO, X), par le fait que les deux voies de réception comportent des dispositifs de compression d'impulsion (PK1, PK2), par le fait qu'un ensemble de filtres Doppler (DF) est en outre raccordé à la première voie de réception, par le fait que les signaux comprimés sortant des deux voies de réception (CO, X) sont amenés à un premier dispositif d'interprétation (AE1) dans lequel ils sont comparés afin de séparer les véritables cibles du fouillis de signaux, et par le fait que les sorties de l'ensemble de filtres Doppler (DF) sont reliées à un deuxième dispositif d'interprétation (AE2) pour la reconnaissance d'hélicoptère(s) par comparaison de la signature Doppler de l'écho (DS) avec des modèles mémorisés.

6. Procédé selon revendication 5, caractérisé par le fait que les dispositifs de compression d'impulsion dans les deux voies de réception sont de construction identique et comportent chacun deux étages de compression (PK1, PK2), et par le fait que l'ensemble de filtres Doppler est raccordé à la suite du premier étage de compression (PK1) de la première branche de réception (X).

7. Dispositif selon revendication 5 ou 6, caractérisé par le fait que des convertisseurs analogique/numérique (A/D) sont raccordés aux entrées du premier dispositif d'interprétation et de l'ensemble de filtres Doppler.

8. Procédé selon l'une des revendications 5 à 7, caractérisé par le fait que l'antenne est du type dit "Pill-box" avec un adaptateur de polarisation circulaire.

EP 0 308 585 B1